# FASCICULE DE BREVET EUROPEEN

(11) **EP 1 487 286 B1**
(45) Date de publication et mention de la délivrance du brevet: **11.10.2006**
(21) Numéro de dépôt: 03738191.0
(22) Date de dépôt: 25.03.2003
(51) Int. Cl.: A23L 1/325, A23J 1/04, A23J 3/04

(54) **PRODUCTION INDUSTRIELLE DE PRODUITS ALIMENTAIRES INTERMEDIAIRES (P.A.I.) A BASE DE CHAIR DE POISSON ET P.A.I. CONDITIONNES AINSI PRODUITS**
INDUSTRIELLE HERSTELLUNG VON INTERMEDIÄREN NAHRUNGSMITTELN AUF BASIS VON FISCHFLEISCH UND SO ERHALTENE PRODUKTE
INDUSTRIAL PRODUCTION OF INTERMEDIATE FOOD PRODUCTS (I.F.P.) BASED ON FISH FLESH AND PACKAGED I.F.P.S THUS PRODUCED

(30) Priorité: 26.03.2002 FR 0203716
(43) Date de publication de la demande: 22.12.2004
(73) Titulaire: LA PATRIMONIALE SCHILL, 57700 Hayange-Marspich (FR); LA PATRIMONIALE CHANTREAU, 57700 Hayange-Marpich (FR)
(72) Inventeur: SCHILL, Robert, F-57700 Hayange-Marspich (FR); CHANTREAU, Jean-Vincent, F-50400 Granville (FR)
(74) Mandataire: Kihn, Pierre Emile Joseph
(86) Numéro de dépôt international: PCT/FR2003/000933
(87) Numéro de publication internationale: WO 2003/079820

(56) Documents cités:
- FR-A- 2 651 967
- FR-A- 2 702 127
- KELLEHER S D ET AL: "Stability of mackerel surimi prepared under lipid-stabilizing processing conditions." JOURNAL OF FOOD SCIENCE 1994 UNIV. OF MASSACHUSETTS, MARINE STA., PO BOX 7128 LANESVILLE STATION, GLOUCESTER, MA 01930, USA, vol. 59, no. 2, pages 269-271, XP002226711
- CHING L H ET AL: "Progrès récents dans la récupération des protéines myofibrillaires par la technologie de préparation de surimi" SCIENCES DES ALIMENTS 1993 IFREMER, CENT. DE NANTES, RUE DE L'ILE D'YEU, 44037 NANTES CEDEX 01, FRANCE, vol. 13, no. 2, pages 229-236, XP008012311

## Description

L'invention se situe dans le domaine de l'industrie alimentaire et plus particulièrement dans le domaine de la production de surimi-base et autres Produits Alimentaires Intermédiaires (P.A.I.) analogues élaborés à partir de chair de poisson.

Il est rappelé que le surimi-base désigne de façon générique un concentré hydraté de protéines myofibrillaires, obtenu à partir de chair de poisson hachée, lavée, tamisée et essorée à plusieurs reprises, de sorte à obtenir un gel protéique utilisé dans la fabrication de kamaboko et autres produits dérivés.

Le procédé de fabrication traditionnel de surimi-base existe depuis le XV^{éme} siècle et différentes améliorations ont été apportées à cette technologie de base de sorte, soit à améliorer les rendements de production, soit à obtenir un produit présentant de meilleures caractéristiques physiques (force de gel, blancheur, élasticité, stabilité).

Quelles que soient les méthodes décrites ci-après, l'objectif des inventeurs a toujours été de parfaire les méthodes de séparation et d'extraction des protéines myofibrillaires de la chair du poisson, seules responsables de la qualité du surimi-base, et d'optimiser l'élimination des agents pro-oxydants ou dénaturants.

Il convient en effet de préciser que si seules les protéines myofibrillaires sont responsables des qualités recherchées du surimi-base, les autres substances naturellement présentes dans la chair de poisson, telles que par exemple les lipides et les protéines sarcoplasmiques, modifient les propriétés fonctionnelles des protéines myofibrillaires et entraînent une dénaturation du produit fini (surimi-base).

Actuellement, le surimi-base est principalement préparé à partir de poissons "maigres" ou "blancs", tels le colin, le lieu ou le merlan pour la raison essentielle que leurs tissus contiennent une forte proportion de muscles "blancs", riches en protéines myofibrillaires, et une faible proportion de muscles "rouges", riches en lipides et en éléments pro-oxydants

Ces poissons "blancs", recherchés non seulement en vue de la production de surimi-base mais aussi pour des utilisations traditionnelles (entiers ou en filets, frais ou congelés), présentant une dynamique de renouvellement des stocks exploitables longue, sont le plus souvent surexploités et assujettis à des quotas de capture. Ces constats bio-économiques ont une incidence significative sur les prix d'accès à la ressource, entraînant des spéculations saisonnières peu adaptées à une stratégie commerciale industrielle à long terme.

A contrario, les poissons dits "gras", tels le chinchard, la sardine, ou le maquereau, contiennent une forte proportion de muscles "rouges" et de lipides rendant problématique leur utilisation en vue de la production de surimi-base pour les raisons sus évoquées.

Il a cependant été tenté d'utiliser ces poissons "gras" dans l'industrie du surimi-base du fait de leur abondance, de la rapidité du renouvellement de leurs stocks exploitables, et de leur faible valeur commerciale.

Mais, la transposition des procédés connus de fabrication du surimi-base à partir de poissons "maigres" aux poissons "gras", impose que soient effectués des lavages et des raffinages plus poussés de la chair afin d'éliminer les lipides, les pigments et les protéines sarcoplasmiques excédentaires. Ces opérations successives entraînent des pertes significatives de rendement de production et par conséquent une faible rentabilité économique.

En second lieu, et d'une manière générale, les procédés connus ou proposés jusqu'ici pour la fabrication du surimi-base n'intègrent pas les spécificités de la matière première : le poisson. Or selon l'espèce pêchée, la saison de pêche, la méthode de capture et de conservation avant traitement, on observe des variations importantes de la composition biochimique de la chair du poisson entraînant des fluctuations qualitatives sur le produit fini (surimi-base). En somme, la qualité d'un surimi-base est, pour un procédé donné, directement dépendante des spécificités du poisson à partir duquel ce surimi est fabriqué.

Ainsi, selon un premier procédé existant, les poissons étêtés, éviscérés et présentés en filets, sont introduits manuellement entre deux tambours dont l'un est formé par une grille (tamis) permettant une séparation des tissus musculaires des arêtes et des tissus épidermiques en fonction d'un gradient de pression.

La pulpe obtenue contient en proportion variable des protéines sarcoplasmiques, des protéines myofibrillaires, des protéines du tissu conjonctif, des lipides ainsi que diverses impuretés.

Cette pulpe brute est ensuite soumise à une série de lavages à l'eau, puis d'essorages, afin d'éliminer les protéines solubles ainsi que les lipides.

La troisième étape de ce procédé consiste en un pressage de la pulpe permettant d'éliminer l'excès d'eau et d'obtenir une pulpe dont la teneur en eau avoisine les 80 %.

La quatrième étape consiste en une phase de raffinage ayant pour objectif d'éliminer les tissus conjonctifs contenus dans la pulpe. Dans ce procédé, le raffinage est réalisé à sec. Le produit est ensuite mis en plaque puis congelé après mélange avec différents cryoprotecteurs.

Un second procédé de fabrication du surimi-base comprend un lavage en continu de la pulpe, suivi d'une décantation centrifuge ou d'un pressage avant raffinage de sorte à mieux maîtriser le taux d'humidité dans le produit fini. Différentes variantes de ce système ont été proposées, ordonnançant et alternant différemment ces diverses étapes.

Mais ces procédés de l'art antérieur ne permettent pas d'éliminer totalement les tissus conjonctifs et les impuretés telles les débris de peau qui doivent être éliminés avant la fabrication ultérieure du kamaboko, du fait principalement que le raffinage à sec ne permet pas un tamisage de la pulpe avec des trous suffisamment fins sans colmatage ou sans échauffement du produit. De surcroît, le pressage de la pulpe entraîne une perte significative en rendement du fait d'une déshydratation aléatoire et peu précise de la pulpe.

Un troisième procédé, décrit dans le document FR 2.651.967, a permis d'optimiser notablement ces méthodes de production en réalisant un raffinage en milieu très humide suivi d'une décantation centrifuge.

Ce raffinage en milieu humide (teneur en eau d'au minimum 92 %) présente pour avantages :
- d'éliminer le muscle "rouge" où se trouvent présents des protéines sarcoplasmiques, des protéases thermorésistantes. En effet, lors d'un raffinage en milieu humide, il n'existe pas d'équilibre entre la chair du poisson et le milieu de lavage et les éléments constitutifs de la chair réagissent différemment. Les protéines du muscle "blanc" gonflent et forment un produit intermédiaire entre un gel et de la pulpe qui peut passer à travers un tamis de perforation de l'ordre de 1 mm, alors que les protéines du muscle "rouge" s'hydratent moins et restent fermes empêchant le passage à travers le tamis;
- de faciliter la dislocation des structures des cellules grasses et par conséquent de parfaire l'élimination des lipides;
- de faciliter l'élimination des fibres du tissu conjonctif ainsi que des impuretés.

Si ce troisième procédé est applicable à tout type de poisson, et particulièrement aux poissons dits « gras », par le fait qu'il permet une meilleure purification de la pulpe et une meilleure élimination des agents pro-oxydants ou dénaturants, il présente néanmoins pour désavantage, comme toutes les techniques de l'art antérieur, d'entraîner d'importantes diminutions des rendements de production, proportionnellement aux nombre de séquences de lavage - essorage et au degré de raffinage.

En résumé, le principe de l'art antérieur est avant tout de rechercher par tous les moyens à se débarrasser des protéines sarcoplasmiques, des lipides, des pigments et autres substances pro-oxydantes et par élimination de ces éléments d'éviter toute interaction protéines / protéines ou lipides / protéines responsables de la dénaturation du produit fini (surimi-base).

Le but premier de l'invention est de proposer un procédé pour la production de surimi-base et autres Produits Alimentaires Intermédiaires à partir de tout type de poissons, adaptable en fonction de la nature et des spécificités du poisson utilisé et en fonction de la qualité finale du produit recherchée.

L'invention a aussi pour but de proposer un procédé pour la production de surimi-base et autres Produits Alimentaires Intermédiaires à partir notamment, de poissons "gras", pour lesquels le rendement de la production est amélioré par rapport à la technique antérieure.

A cet effet l'invention a pour objet un procédé de fabrication de concentrés hydratés de protéines myofibrillaires à partir de chair de poisson, communément appelés surimi-base ou Produits Alimentaires Intermédiaires, comprenant la succession des étapes suivantes:
- on prépare d'abord, à partir de filets de poissons, une pulpe initiale de chair de poisson hachée ;
- on lave ensuite à l'eau ladite pulpe initiale jusqu'à l'obtention d'une pulpe lavée contenant une fraction résiduelle de lipides et protéines sarcoplasmiques comprise entre 0,1 et 3 % du poids de la pulpe
- ensuite, on raffine à l'état humide la pulpe lavée par élimination d'une fraction d'impuretés
- puis, on mélange la pulpe raffinée jusqu'à obtention d'une pulpe en émulsion homogène;
- on assèche alors la pulpe émulsifiée de manière à produire une pulpe densifiée ;
- on ajoute ensuite des cryoprotecteurs à la pulpe densifiée pour former une pulpe finale apte à la congélation ;
- puis, on conditionne la pulpe finale en plaques de nutriment ;
- et on congèle lesdites plaques.

Comme on le comprendra encore mieux par la suite, l'invention consiste, pour l'essentiel, à conserver une certaine fraction lipidique et protéinique lors du lavage et du traitement de la pulpe de poisson, et par la suite de neutraliser le potentiel oxydant ou dénaturant de ces lipides et protéines résiduels.

Selon une mise en oeuvre préférée de l'invention, l'opération de pulpage est couplée avec une addition d'eau. De préférence, l'eau est additionnée selon un ratio d'au moins un volume d'eau pour trois volumes de pulpe.

Préférentiellement, l'opération de pulpage s'effectue en fonction d'un gradient de densité de la matière, permettant de distinguer différentes fractions.

Une réalisation préférée de l'invention retiendra une opération de lavage composée des étapes suivantes :
- On brasse la pulpe initiale préalablement additionnée d'eau pour former un mélange eau-pulpe
- On essore le mélange eau-pulpe, l'eau issue de l'essorage étant éliminée
- On lave en continu avec de l'eau la pulpe essorée.

Préférentiellement, lors de l'étape d'essorage, le volume d'eau éliminé se situe entre 80 et 95 % du volume d'eau mis en jeu initialement.

De préférence, on mène l'opération de mélange en continu jusqu'à ce que la pulpe se présente sous forme d'une émulsion dont la stabilité est supérieure à 10 minutes.

Une autre mise en oeuvre préférée de l'invention prévoit que l'on procède après l'étape de mélange en continu à une désodorisation de la pulpe homogénéisée par mise sous vide de celle-ci.

Une réalisation préférée de l'invention retiendra que l'opération d'assèchement de la pulpe émulsifiée se fait par décantation centrifuge.

Une autre mise en oeuvre préférée de l'invention prévoit que l'on effectue une opération d'extrusion à froid de la pulpe finale au moment de l'ajout des cryoprotecteurs.

L'invention a aussi pour objet une installation pour la mise en oeuvre du procédé préalablement défini comprenant les éléments suivants montés en série les uns à la suite des autres et dans cet ordre :
- un dispositif de pulpage pourvu en outre d'un bac de récupération des déchets;
- un dispositif de lavage de la pulpe pourvu d'un système d'évacuation des eaux de lavage;
- un dispositif de raffinage de la pulpe pourvu d'un système d'évacuation de la fraction éliminée
- un dispositif de mélange en continu de la pulpe;
- un dispositif d'assèchement de la pulpe pourvu d'un système d'évacuation de la fraction liquide;
- un dispositif d'ajouts de cryoprotecteurs à la pulpe;
- un dispositif de formage des plaques de nutriment;
- et un dispositif de congélation des plaques de nutriment.

Dans une mise en oeuvre préférée de l'invention, le dispositif de pulpage consiste en un tamis cylindrique présentant des perforations de diamètre différent selon un gradient linéaire allant de 0,2 à 0,4 mm et en une vis sans fin convoyeuse à pas variable disposée à l'intérieur dudit tamis, pourvu en amont d'une trémie.

Préférentiellement, le dispositif de lavage est constitué successivement de :
- une cuve à double enceinte réfrigérée, munie d'une canule pour addition éventuelle d'eau, et d'un équipement de brassage au fond et sur toute la hauteur de la cuve,
- une essoreuse à grille;
- un dispositif de lavage en continu constitué d'une cuve cylindrique à double enceinte réfrigérée munie d'une canule pour addition d'eau et d'un équipement de brassage.

Avantageusement, le dispositif de mélange de la pulpe est un mélangeur en continu statique de type LPD (Low Pressure Drop)

Une mise en oeuvre préférée de l'invention comportera en outre un dispositif de désodorisation placé après le dispositif de mélange en continu.

Préférentiellement, le dispositif d'assèchement de la pulpe est un dispositif de décantation centrifuge.

Une mise en oeuvre préférée de l'invention comportera en outre un dispositif d'extrusion à froid permettant l'ajout de cryoprotecteurs.

Préférentiellement, le dispositif d'extrusion à froid est constitué successivement de :
- un convoyeur de type transporteur à vis capote;
- un poussoir à débit contrôlé;
- une extrudeuse double vis munie de moyen de contrôle et de réglage de la pression;

L'invention a encore pour objet le surimi-base obtenu par le procédé sus-cité à partir de poisson gras tel que sa teneur en matières grasses résiduelles est comprise entre 0,1 et 1,5%.

Avantageusement, le poisson gras peut être de la sardine, du chinchard, de maquereau ou de la sardinelle.

Les différents points essentiels à la base de l'invention seront repris un à un et explicités par la suite, mais l'invention sera d'abord bien comprise au vu de la description de l'exemple qui suit, donné en référence aux planches de dessins annexées sur lesquelles:
- la figure 1 est un synoptique donnant le schéma fonctionnel du traitement selon l'invention ;
- la figure 2 est un schéma de l'installation de mise en oeuvre selon l'invention.
- la figure 3 est une courbe présentant la variation du rendement de production (Rd) en surimi-base de sardine à partir de poissons entiers (pourcentages en poids net) en fonction du pourcentage de lipides résiduels (LR) micro-encapsulés au sein de la matrice protéique.
- la figure 4 est une courbe présentant la variation du gradient de force de gel (FG) du surimi-base de sardines en fonction du pourcentage de lipides résiduels (LR) micro-encapsulés au sein de la matrice protéique.

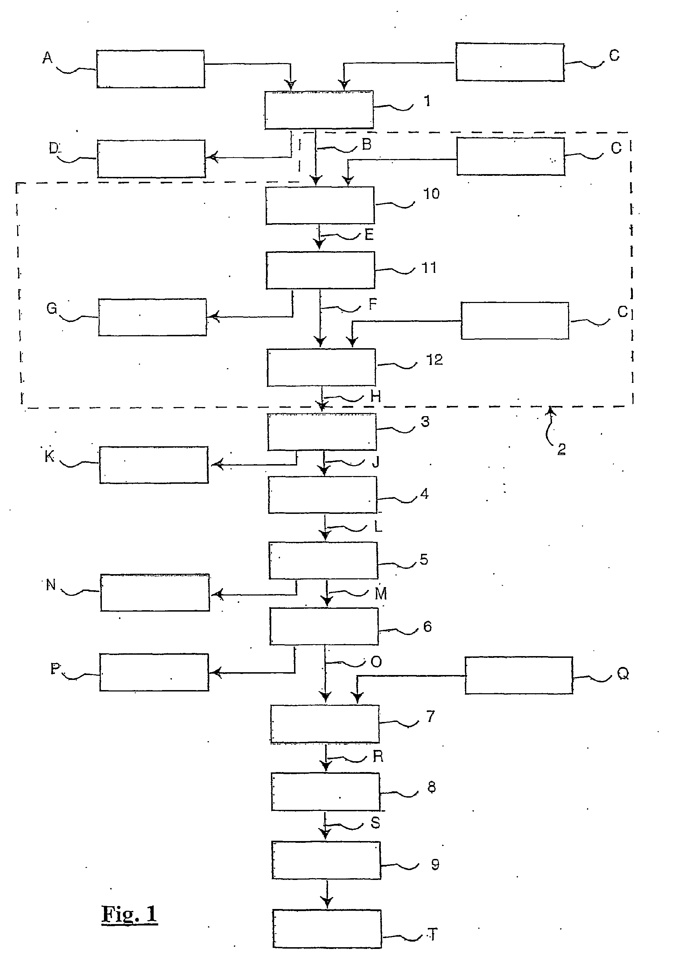

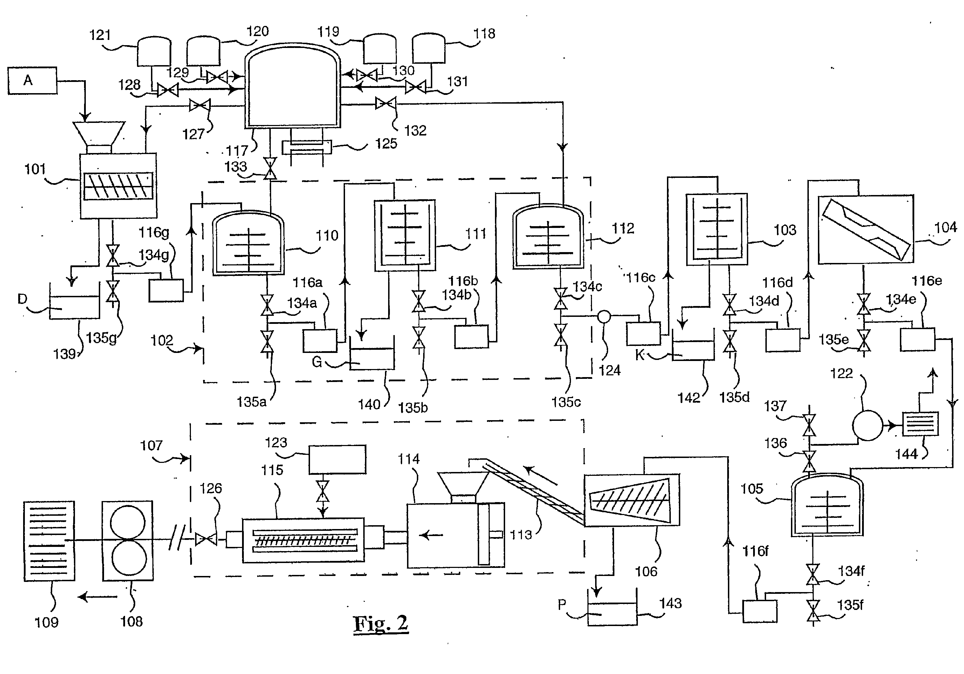

Le procédé va être décrit à présent, en référence principalement aux figures 1 et 2 (sauf indications expresses contraires), en respectant l'ordre chronologique des étapes opératoires (ou phases) qui le constituent. Il est applicable à tout type de poissons, gras ou non, d'eau douce ou d'eau de mer, à quelque période que ce soit de son cycle naturel.

### Phase 1 : Pulpage (1)

La pulpe est obtenue au moyen d'une pulpeuse 101 par séparation en fonction d'un gradient de densité de la matière par séparation linéaire graduelle le long d'un tambour présentant plusieurs diamètres de perforations. Cette séparation en fonction de leur densité et de leur texture permet d'optimiser la séparation des tissus musculaires des tissus adipeux sous cutanés ainsi que des arêtes et de la peau.

Le poisson A étêté et éviscéré (sans péritoine), mis en filet ou non, est introduit dans une trémie et repris par une vis convoyeuse sans fin à pas variable au coeur d'un tamis cylindrique présentant des perforations allant de 0,2 à 0,4 mm. En fonction de la densité des tissus, du diamètre des perforations et des contraintes de pression générées par la vis sans fin, on obtient une séparation graduelle des éléments constitutifs de la matière introduite. Suivant le cahier des charges qualitatif appliqué pour le produit fini (surimi-base - Produit Alimentaire Intermédiaire), il sera conservé une ou plusieurs fractions de matière.

Contrairement aussi à l'art antérieur, il est procédé, dès cette étape, à l'addition d'eau de process C immédiatement à la sortie du cylindre de tamisage dans les proportions de 1 pour 1/3 ( 1/3 de volume d'eau pour 1 volume de pulpe) au moyen d'une vanne 127. Cette addition immédiate d'eau permet une meilleure solubilisation des protéines sarcoplasmiques dont les capacités de dilution sont optimales dès les premières secondes du malaxage de la pulpe.

L'eau de process sera préparée dans une cuve à double enceinte 117 à partir d'eau douce la plus pure possible, dont la dureté sera ajustée à 13°H (degré français), ce qui équivaut à 130 mg/L de carbonate de calcium et sa température sera de l'ordre de 5°C. Le pH de l'eau de process pourra être ajusté de sorte à ce que la pulpe de poisson reste la plus neutre possible et que puissent être contrecarrés les phénomènes d'oxydation naturels ayant lieu après la phase de rigor mortis du poisson.

Un dispositif constitué d'une cuve 118 et d'une vanne de dosage 131 assure l'approvisionnement en eau douce. Un dispositif constitué d'une cuve 119 et d'une vanne de dosage 130 permet de réguler la salinité de l'eau process. Un dispositif constitué d'une cuve 120 et d'une vanne de dosage 129 permet de réguler le pH de l'eau process. Un dispositif constitué d'une cuve 121 et d'une vanne de dosage 128 permet de réguler la concentration en agent de conditionnement de l'eau process. La température de l'eau de process est maintenue à 5 °C au moyen d'un échangeur à plaques 125.

Cette technique permet un traitement en continu et mécanisé sans introduction manuelle filet par filet du poisson dans l'outil de pulpage, ce qui, à la connaissance des titulaires n'était pas possible dans l'art antérieur.

A l'issue de cette étape, on récupère au moyen d'une pompe 116g la pulpe B additionnée d'eau, et on élimine une fraction D de déchets vers un bac de stockage 139. La pompe 116g est associée à une vanne de régulation du débit 134g et une vanne de décharge 135g.

### Phase 2 : Lavage (2)

L'opération de lavage doit permettre de conserver une fraction déterminée de lipides et de protéines sarcoplasmiques comprise entre 0,1 et 3 % du poids total de la pulpe. Elle est mise en oeuvre au moyen d'un dispositif de lavage 102. Ce dispositif de lavage 102 est associé en aval à un dispositif 124 de mesure du taux de lipides résiduel constitué d'un capteur en ligne ou d'une unité de prélèvement pour analyse en laboratoire. Selon l'invention, l'opération de lavage se déroule en trois étapes :

### - Etape 1 : Lavage par brassage et stockage tampon (10)

La pulpe B est introduite dans une cuve 110 à double enceinte réfrigérée munie d'un dispositif de brassage en fond de cuve et sur toute la hauteur de la cuve.

Il est procédé à l'addition d'eau de process C de caractéristiques physico-chimiques identiques à celle de la phase 1 de sorte à atteindre la proportion d'un volume d'eau = R1 pour un volume de pulpe (ratio 1:1).

Le brassage est effectué à raison de 20 à 90 révolutions par minutes pendant une durée n'excédant pas ½ heure. La durée de ce lavage -stockage tampon est fonction de la qualité initiale du produit.

### - Etape 2 : Essorage (11)

Le mélange eau-pulpe E est pompé en continu au moyen d'une pompe 116a est introduit dans une essoreuse à grille 111. La pompe 116a est associée à une vanne de régulation du débit 134a et une vanne de décharge 135a.

La pulpe passe dans un tamis cylindrique perforé (diamètre des perforations : 0,5 mm) où elle est centrifugée par un système de pales en rotation. Préférentiellement, le matériel doit fonctionner selon les normes en banc d'essais donnant les résultats suivants : débit de 300 à 400 L/heure pour un tamis de diamètre de 20 cm, de longueur de 25 cm et une vitesse de rotation des pales de 250 tours / min.

L'eau G chargée en protéines solubles et en graisses traverse le tamis et est éliminée au moyen d'un dispositif d'évacuation 140. Préférentiellement, la quantité d'eau récupérée (R2) doit pouvoir être ajustée à une valeur entre 80 et 95 % de la quantité initiale ajoutée lors de la phase 1 et de l'étape 10, soit en moyenne R2 = 90%*R1

### - Etape 3 : Lavage en continu (12)

La pulpe essorée F est acheminée au moyen d'une pompe 116b dans une cuve cylindrique à double enceinte réfrigérée 112 (ou non si pas d'élévation constatée de température dans les conditions spécifiques d'utilisation) munie d'un dispositif de brassage préférentiellement constitué par des doigts cylindriques de 2,5 cm de diamètre et dont la longueur est telle qu'elle permet un espace de 0,5 à 1 mm entre les pales et la jupe. La pompe 116b est associée à une vanne de régulation du débit 134b et une vanne de décharge 135b.

Il est procédé à l'addition d'eau de process C pour un volume préférentiellement égal à R3 = R1 + R2.

Préférentiellement, le brassage s'effectue à vitesse variable de 30 à 200 RPM.Ce lavage est effectué en continu.

### Phase 3 : Raffinage (3)

La pulpe lavée additionnée d'eau H (taux d'humidité compris entre 88 et 95 %) est transférée au moyen d'une pompe 116c dans un raffineur 103. La pompe 116c est associée à une vanne de régulation du débit 134c et une vanne de décharge 135c.

La pulpe passe dans un tamis cylindrique perforé (diamètre des perforations 1 mm.) où elle est centrifugée par un système de pales en rotation à grande vitesse. La pulpe est forcée à travers le tamis. Les parties les plus solides restent à l'intérieur du tamis et sont éliminées. Préférentiellement, le matériel doit fonctionner selon les normes en banc d'essai donnant les résultats suivants : débit de 100 L/heure pour un diamètre de tamis de 14 cm, de longueur de 19 cm. et une vitesse de rotation des pales de 1000 à 1500 RPM.

Ce raffinage permet en priorité d'élimination des fibres du tissu conjonctif ainsi que des débris de peau résiduels. La variation de la vitesse de centrifugation permet d'éliminer graduellement tout ou partie des muscles rouge présents dans la pulpe. La concentration finale en lipides est ajustée lors de cette étape.

La fraction K de déchets est éliminée au travers d'un dispositif d'évacuation 142.

### Phase 4 : Mélange en continu (4)

La pulpe raffinée J est introduite au moyen d'une pompe 116d sous faible pression dans un mélangeur statique 104 en ligne composé d'éléments mélangeant de type LPD (Low Pressure Drop). La pompe 116d est associée à une vanne de régulation du débit 134d et une vanne de décharge 135d.

Ce mélangeur statique est constitué par un ou plusieurs tubes disposant de chicanes internes (deux diaphragmes semi-éliptiques se croisant au centre avec un angle de 90°) disposées de manière à permettre un mélange homogène de la pulpe (stabilité de l'émulsion supérieure à 10 minutes). Le mélange est basé sur la division et la déviation transversale du fluide. D'écoulement laminaire, le nombre de subdivisions L, engendré par E éléments avec N composants à mélanger, est la résultante de la formule L = N(2)^{E}. D'écoulement turbulent, les éléments accentuent la dispersion accidentelle des micro-flux. Ce mélange permet une diffusion rapide des protéines solubles et une séparation mécanique des graisses qui se retrouvent en émulsion stable dans l'eau.

Cette émulsion permet une micro-encapsulation des éléments dénaturants, tels les lipides, au sein de la matrice protéique, et empêche toute interactivité des constituants du mélange entre eux.

### Phase 5 : Désodorisation et mise sous vide (5)

La pulpe de poisson en émulsion stable L est transférée au moyen d'une pompe 116e dans un dispositif de désodorisation 105 constitué d'une cuve à double enceinte réfrigérée reliée à une pompe à vide 122 permettant d'obtenir une dépression d'au moins 0,8 bar et munie d'un système de brassage lent (20 à 90 révolutions / min). La pompe 116e est associée à une vanne de régulation du débit 134e et une vanne de décharge 135e. La pompe à vide 122 est associée en amont à une vanne de régulation du débit 136 et une vanne de décharge 137 et en aval à un filtre 144.

La mise sous vide permet une élimination des composés volatils N responsables, dans l'art antérieur, de la flaveur résiduelle du produit fini (surimi-base)

### Phase 6 : Décantation centrifuge (6)

La pulpe de poisson homogénéisée et désodorisée M est transférée au moyen d'une pompe 116f dans un décanteur centrifuge 106 à débit constant constitué d'un bol cylindro-conique dans lequel est logée une vis convoyeuse. La pompe 116f est associée à une vanne de régulation du débit 134f et une vanne de décharge 135f.

Le produit à traiter est introduit dans la chambre d'alimentation de l'ensemble en rotation grâce à une canne d'alimentation fixe située dans l'axe de rotation du bol. Cette chambre permet une distribution régulière du produit.

Sous l'action de la force centrifuge, la phase solide est plaquée contre la paroi du bol. Les solides sont acheminés par la vis convoyeuse vers la partie conique du bol pour être extraits de la phase liquide et évacués en continu vers l'étape suivante. Le liquide clarifié P (déchet) est évacué par débordement grâce à des orifices situés à l'extrémité cylindrique du bol, puis éliminée au moyen d'un système d'évacuation 143.

L'objectif est de ramener le taux d'humidité du produit dans une fourchette entre 74 - 84 %.

### Phase 7 : Addition de cryoprotecteurs et extrusion à froid (7)

La pulpe décantée O est reprise au moyen d'un transporteur vis capote 113, ou par pompage, et introduite dans un extrudeur bi-vis corotatives à froid 115.

L'alimentation en pulpe de l'extrudeur 115 est réalisée par un poussoir 114 à débit contrôlé permettant un dosage pondéral précis. Une vanne de contre pression 126 est avantageusement disposée à la sortie de l'extrudeur 115 afin de permettre de faire varier les paramètres d'extrusion. L'ensemble transporteur 113 - poussoir 114 - extrudeur 115-vanne de contre pression 126 constitue, selon l'invention, le dispositif d'extrusion à froid 107.

Un dispositif 123, associé à une vanne de dosage 138, permet l'addition de trois additifs pulvérulents cryoprotecteurs Q dans les proportions suivantes: Sucre: 4 %; Sorbitol: 4 %; Polyphosphate: 0,1 %.

La pulpe est entraînée par une double vis sur laquelle sont répartis des éléments de transfert, de malaxage et de cisaillement permettant une désorganisation optimale des fibres musculaires qui donnera au produit fini (surimi-base) ses propriétés de gélification.

L'objectif de cette micro-déstructuration est de permettre, outre un mélange intime avec les cryoprotecteurs, d'augmenter le nombre de sites potentiels de réaccrochages protéiques par formation d'un réseau protéique tridimensionnel continu et ordonné.

Cette phase d'extrusion devra s'effectuer dans des conditions contrôlées de température de sorte à éviter, tant une dénaturation des protéines qu'une prise en masse de la pulpe dans le fourreau de l'extrudeuse.

### Phase 8 : Formage des plaques (8)

La pulpe R est récupérée en continue à la sortie de l'extrudeur et introduite dans un dispositif de formage de plaques 108. Elle y est formée en plaques S de 5 à 10 cm d'épaisseur et de poids de 10 ou 20 kg, puis conditionnée en sachets en polyéthylène opaques.

### Phase 9 : Congélation (9)

Les plaques S conditionnées seront refroidies le plus rapidement possible après extrusion (délai d'attente inférieur à 30 minutes à 4°C.) à une température inférieure à - 5°C. de sorte à conserver au produit toutes ses propriétés. Le dispositif de congélation 109 préféré fonctionnera par contact. Les plaques de surimi congelées T sont ainsi prêtes à l'emploi.

A titre d'exemple, le débit entrant dans une telle installation de production sera de 1400 kg par heure de filets de poissons pour un débit de sortie de 720 kg par heure de surimi conditionné prêt à l'emploi.

Un autre exemple est donné par le tableau suivant qui représente un suivi massique des différentes phases (huile, solide, eau) contenues dans la matières au long du procédé selon l'invention. Les 2400 kg de filets de poisson introduits initialement ont été obtenus à partir de 4000 kg de poisson entier. Le débit de production est de 2400 kg de filets introduits par heure. Dans cet exemple, la phase de désodorisation (5) n'est pas mise en oeuvre.

| | Huile (kg) | Eau (kg) | Solide (kg) | Total (kg) |
|---|---|---|---|---|
| Introduction de 2 400 kg de filets | 288 | 1 752 | 360 | 2 400 |
| Brassage (10): Addition de 2 400 kg d'eau | 288 | 4152 | 360 | 4 800 |
| Essorage (11): Elimination de 2 160 kg d'eau de lavage | 15 | 2 380 | 245 | 2 640 |
| Lavage en continu (12): Addition de 4 500 kg d'eau | 15 | 6 880 | 245 | 7140 |
| Raffinage (3): Elimination de 1 345 kg d'eau et impuretés | 13 soit 0,2 % | 5 573 | 209 | 5 795 |
| Mélange en continu (4):Obtention d'une émulsion | -- | 5 573 | 222 | 5 795 |
| Décantation centrifuge (6): Elimination de 4 685 kg de liquide | -- | 900 | 210 | 1 110 |
| Extrusion (7): Addition de 90 kg de cryo-protecteurs | -- | 900 soit 75 % | 300 soit 25 % | 1 200 |

On constate que le fait de conserver 0,2 % d'huile après l'opération de raffinage (3) et d'incorporer celle-ci à la phase solide par micro-encapsulation dans le réseau protéique au moyen de l'obtention d'une émulsion, permet d'obtenir au final 1200 kg de surimi. Ce qui revient à obtenir un rendement de 30 % par rapport à la masse de poisson mise en oeuvre, ou de 50 % par rapport à la masse de filet introduite.

Il va de soi que ces exemples ne sont pas limitatifs. Ainsi la désodorisation (5) de la pulpe est une mise en oeuvre préférée de l'invention, mais peut ne pas être effectuée. De même, l'extrusion à froid (7) de la pulpe n'est pas indispensable à la mise en oeuvre de l'invention. Un simple ajout de cryoprotecteurs de manière classique est aussi possible. Le pulpage (1) peut être effectué de manière classique lui aussi. De même, le lavage (2) de la pulpe peut être effectué par d'autres moyens pour peu qu'il permette de conserver la fraction précitée comprise entre 0,1 et 3 % de lipides et de protéines sarcoplasmiques. Enfin l'opération d'assèchement (6) de la pulpe peut être effectuée par pressage de celle-ci.

Comme on l'a déjà dit, la singularité de l'invention repose sur deux points essentiels qui sont détaillés à présent ci-dessous et dont le respect conjoint permet la production industrielle de nutriment dans des conditions économiques satisfaisantes à partir de poissons "gras" à faible valeur marchande.

### 1 - Maîtrise des phénomènes d'oxydation et de dénaturation

Les phénomènes de dénaturation et d'oxydation des protéines myofibrillaires par les lipides ou les protéines sarcoplasmiques sont dus à des interactions lipides/protéines ou protéines/protéines. Le procédé selon l'invention permet dans un premier temps de limiter l'apparition de ces phénomènes, puis dans un second temps de neutraliser les éléments les provoquant.

La dénaturation et l'oxydation des protéines myofibrillaires débute habituellement dès l'opération de pulpage. Selon l'invention, un volume d'eau, équivalent au moins au tiers du volume de pulpe mis en jeu, est ajouté à la pulpe simultanément à l'opération de pulpage, dans le but de mettre en solution les protéines sarcoplasmiques le plus tôt possible et par là limiter leur action' oxydante et dénaturante.

L'eau de process utilisée tout au long du procédé selon l'invention, et donc au niveau de l'opération de pulpage sera, comme classiquement, de haute pureté avec une température comprise entre 0 et 10 °C. Son pH pourra être ajusté par l'homme du métier de sorte à ce que la pulpe reste la plus neutre possible.

Les lipides et les protéines sarcoplasmiques résiduels sont ensuite neutralisés au cours de l'étape de mélange en continu - Phase 4. Le mélange intime de la pulpe additionnée d'eau, au cours de cette opération, va permettre une diffusion rapide des protéines solubles dans l'eau et une séparation mécanique des lipides qui forment une émulsion stable dans l'eau. On réalise ainsi une micro-encapsulation de ces éléments au sein de la matrice protéique. Toute interaction entre les constituants du mélange étant prévenue, il y a neutralisation des phénomènes d'oxydation et de dénaturation.

La maîtrise de ces phénomènes va permettre d'obtenir tout au long de l'année un surimi de haute qualité, quelle que soit la spécificité du poisson utilisé, ce qui n'était pas possible avec la technique antérieure. Elle va permettre aussi de conserver une fraction résiduelle de lipides et de protéines sarcoplasmiques, dans le surimi-base et d'améliorer de la sorte le rendement de production, notamment quand le procédé est appliqué à la production de surimi-base à partir de poissons gras.

### 2 - Gestion de la purification de la pulpe :

Comme on l'a vu précédemment, la technique antérieure avait pour objectif d'éliminer la totalité, ou du moins le plus possible, des protéines sarcoplasmiques, des lipides et des impuretés.

L'invention permet, comme nous allons le voir, d'éliminer les impuretés et les composés odoriférants, tout en contrôlant l'élimination des lipides et des protéines sarcoplasmiques. L'invention permet de conserver une fraction plus ou moins importante de ces éléments, en fonction du grade de qualité visé pour le produit fini.

Selon l'invention, l'élimination des éléments indésirables débute dès l'opération de pulpage - Phase 1.

Dans le procédé selon l'invention, le pulpage permet, grâce à une gradation du diamètre des perforations du tamis, de distinguer différentes fractions en fonction de la densité de la matière. Ce dispositif présente trois avantages majeurs.

D'abord, la récupération du produit peut être optimisée selon le grade de qualité visé. C'est à dire que l'on peut choisir de conserver une ou plusieurs des fractions de matière en fonction de la qualité initiale du produit brut.

Ensuite les impuretés, telles que les arêtes ou la peau, seront éliminées de manière plus efficace puisque se retrouvant en fin de course de séparation, ce qui permet d'améliorer la qualité du produit final (blancheur du surimi).

Enfin, l'introduction des filets de poisson n'a plus besoin d'être manuelle mais peut être réalisée de manière mécanisée, en continu au moyen d'une trémie.

La pulpe sera ensuite lavée et raffinée. Il sera possible d'ajuster la teneur résiduelle en lipides et en protéines sarcoplasmiques en régulant les paramètres d'essorage lors du lavage et de raffinage.

Ainsi durant l'étape d'essorage (11), on éliminera entre 80 et 95 % de la quantité initiale d'eau mise en jeu. Ce premier choix permet un premier ajustement de la teneur finale en lipides et protéines. L'étape d'essorage (11) selon l'invention, devient un des points de réglage de la qualité du produit finale.

L'ajustement de la teneur finale en lipides et protéines sarcoplasmiques s'effectuera lors de l'opération de raffinage (phase 3), ce raffinage se faisant sur une pulpe dont on aura choisi le taux d'humidité en fonction du grade de qualité que l'on veut atteindre du fait des mécanismes de séparation expliqué ci-avant. Le raffinage n'a plus uniquement, dans le procédé selon l'invention, un rôle de lavage de la pulpe, il devient un des points de réglage de la qualité du produit final. L'objectif de l'invention est, à ce stade, de conserver une fraction déterminée de ces lipides comprise entre 0,2 et 1,5 % du poids total.

Le procédé selon l'invention permet comme nous l'avons vu une bonne élimination des impuretés, offrant à l'homme du métier un produit ayant de bonnes caractéristiques, ceci tout en lui permettant de conserver une proportion plus ou moins importantes de lipides et de protéines sarcoplasmiques dont les pouvoirs oxydants et dénaturants ont été neutralisés. Cette souplesse de procédé permettant de s'adapter à la nature et des spécificités du poisson utilisé et à la qualité finale du produit recherchée ne se retrouve pas, de la connaissance du demandeur, dans l'art antérieur, de même que la conservation volontaire de lipides et de protéines sarcoplasmiques.

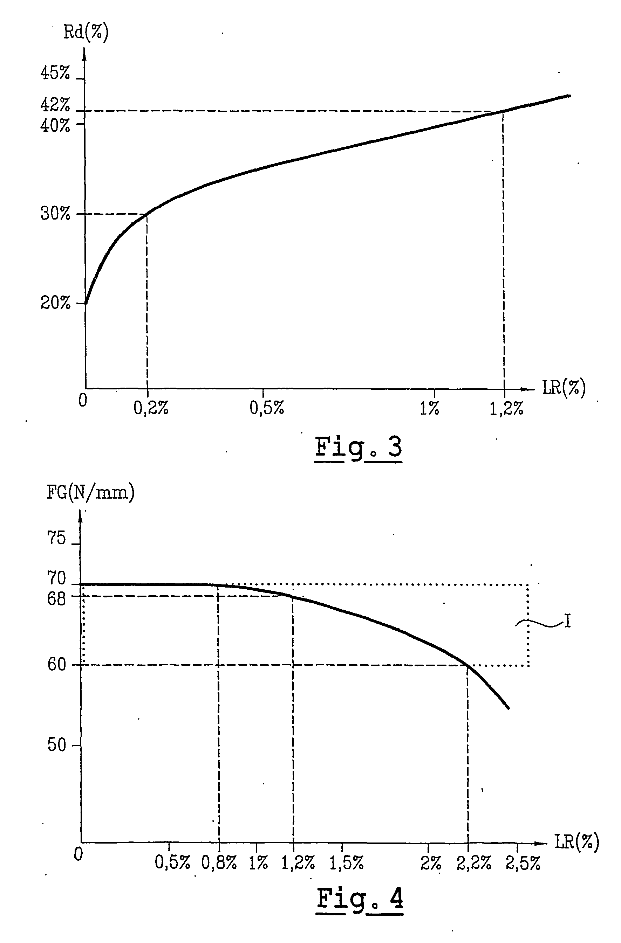

On observera sur la figure 3 que pour un pourcentage de 0,2 % de lipides micro-encapsulés, on obtient un rendement de 30 % ; et que pour 1,2 % de lipides micro-encapsulés, on obtient un rendement de 42 %.

De même, on observera sur la figure 4 qu'en deçà d'un taux de lipides de 0,8 %, il n'y a aucune incidence sur la force de gel du surimi. On notera que jusqu'à un taux de 2,2 %, on obtient toujours de gels de haute qualité (zone I encadrée sur la figure). Pour 1,2 % de lipides micro-encapsulés, on a un gradient de force de gel de 68 N.mm⁻¹.

Outre les caractéristiques et avantages majeurs que nous venons de décrire, l'invention offre d'autres avantages, notamment quant à la qualité du surimi produit.

Par exemple, un des avantages de l'invention, par rapport à la qualité du surimi produit, est de comporter une étape supplémentaire d'élimination spécifique des composés volatils responsables dans l'art antérieur de la flaveur du produit, par mise de la pulpe sous vide - Phase 5.

Un autre exemple concerne les critères de force et de qualité du gel qu'il formera après sa cuisson auquel doit répondre le surimi-base.

Là aussi l'invention permet d'améliorer la qualité du surimi-base produit par la mise en oeuvre d'une opération d'extrusion à froid de la pulpe - Phase 7 - en fin de procédé.

Sous l'effet du cisaillement intense généré au sein de l'extrudeuse, les protéines natives vont se dissocier en monomères. Les chaînes polypeptidiques vont se déplisser et démasquer les groupements réactifs sièges de réactions hydrophobes et de créations de ponts disulfures responsables de l'organisation des protéines en un réseau tridimensionnel continu et ordonné.

L'extrusion à froid permet donc d'améliorer les capacités du surimi-base à former un gel stable en augmentant le nombre de sites de réaccrochage des protéines myofibrillaires, et de compenser l'éventuelle altération de ces propriétés que la présence de lipides résiduels aurait pu générer.

Enfin, l'opération d'extrusion permet de ne pas utiliser de sel (ou peu) pour réaliser le réaccrochage protéique, ce qui permet à la pulpe de moins s'altérer, et d'utiliser moins d'additifs cryoprotecteurs.

Un autre avantage concerne la quantité d'eau nécessaire à la mise en oeuvre du procédé. Les procédés de l'art antérieur nécessitent plusieurs additions d'eau successives amenant à utiliser pour traiter un volume de pulpe jusqu'à cinq fois ce volume en eau. Certaines techniques traditionnelles sur le poisson gras peuvent même conduire à utiliser sept volumes d'eau pour un volume de pulpe. Dans le procédé selon l'invention on utilisera trois volumes d'eau pour un volume de pulpe, diminuant de la sorte les coûts de production.

Un autre avantage du procédé selon l'invention est qu'il peut se dérouler totalement en continu, depuis l'entrée des filets de poisson dans la pulpeuse jusqu'au formage des plaques.

Comme déjà souligné, l'invention trouve une application privilégiée dans le domaine de la production industrielle de surimi-base à partir de poissons "gras". Elle reste cependant bien entendu applicable de manière générale à la production de surimi-base, ou de tout autre produit alimentaire intermédiaire, à partir de toutes espèces de poissons.

Il va de soi que l'invention ne saurait se limiter à cet exemple, mais qu'elle s'étend à de multiples variantes ou équivalents dans la mesure où est respectée sa définition donnée dans les revendications jointes.

## Revendications

1. Procédé de fabrication de Produits Alimentaires Intermédiaires sous forme de concentrés hydratés de protéines myofibrillaires à partir de chair de poisson, comprenant la succession des étapes suivantes prises dans cet ordre:
- on prépare d'abord (1), à partir de filets de poissons (A), une pulpe initiale (B) de chair de poisson hachée;
- on lave ensuite (2) à l'eau (C) ladite pulpe initiale jusqu'à obtenir une pulpe lavée (H) contenant une fraction résiduelle de lipides et protéines sarcoplasmiques comprise entre 0,1 et 3 % du poids de la pulpe;
- ensuite, on raffine à l'état humide (3) la dite pulpe lavée (H) par élimination d'une fraction d'impuretés (K);
- puis, on mélange (4) la pulpe raffinée (J) jusqu'à obtention d'une pulpe en émulsion homogène (L);
- on assèche (6) alors la pulpe émulsifiée (L)de manière à produire une pulpe densifiée (O);
- on ajoute ensuite (7) des cryoprotecteurs (Q) à la pulpe densifiée (O) pour former une pulpe finale (R) apte à la congélation;
- puis, on conditionne (8) la pulpe finale (R) en plaques (S);
- et, on congèle (9) lesdites plaques (S)

2. Procédé selon la revendication 1 **caractérisé en ce que** l'opération de pulpage (1) est couplée avec une addition d'eau.

3. Procédé selon la revendication 2 **caractérisé en ce que** l'eau est additionnée selon un ratio d'au moins un volume d'eau pour trois volumes de pulpe.

4. Procédé selon la revendication 1 ou 2 **caractérisé en ce que** l'opération de pulpage (1) s'effectue en fonction d'un gradient de densité de la matière.

5. Procédé selon la revendication 1 **caractérisé en ce que** l'opération de lavage (2) est composée des étapes suivantes :
- on brasse (10) la pulpe initiale (B) préalablement additionnée d'eau (C) pour former un mélange eau-pulpe (E);
- on essore (11) le mélange eau-pulpe (E), l'eau issue de l'essorage (G) étant éliminée;
- on lave en continu (12) avec de l'eau (C) la pulpe essorée (F).

6. Procédé selon la revendication 5 **caractérisé en ce que**, lors de l'étape d'essorage (11), le volume d'eau éliminé (E) se situe entre 80 et 95 % du volume d'eau mis en jeu initialement.

7. Procédé selon la revendication 1 **caractérisé en ce que** l'on mène l'opération de mélange (4) jusqu'à ce que la pulpe homogénéisée (L) se présente sous forme d'une émulsion dont la stabilité est supérieure à 10 minutes.

8. Procédé selon la revendication 1 **caractérisé en ce qu'**après l'étape de mélange (4), on procède à une désodorisation (5) de la pulpe émulsifiée (L) par mise sous vide de celle-ci.

9. Procédé selon la revendication 1 **caractérisé en ce que** l'opération d'assèchement (6) de la pulpe émulsifiée (L) se fait par décantation centrifuge.

10. Procédé selon la revendication 1 **caractérisé en ce que**, au moment de l'ajout des cryoprotecteurs (Q), on effectue une opération d'extrusion à froid (7) de la pulpe finale (R).

11. Installation pour la mise en oeuvre du procédé selon la revendication 1, **caractérisée en ce qu'**elle comprend les éléments suivants montés en série les uns à la suite des autres et dans cet ordre:
- un dispositif de pulpage (101) pourvu en outre d'un bac de récupération des déchets (139)
- un dispositif (102) de lavage de la pulpe pourvu d'un système d'évacuation des eaux de lavage;
- un dispositif (103) de raffinage de la pulpe pourvu d'un système d'évacuation (142) de la fraction (K) éliminée;
- un dispositif (104) de mélange en continu de la pulpe;
- un dispositif (106) d'assèchement de la pulpe pourvu d'un système d'évacuation (143) de la fraction liquide (P);
- un dispositif (123) d'ajouts de cryoprotecteurs (Q) à la pulpe;
- un dispositif (108) de formage de la pulpe en plaques (S);
- un dispositif de congélation (109) des plaques (S).

12. Installation selon la revendication 11 **caractérisée en ce que** le dispositif (101) de pulpage de la pulpe consiste en un tamis cylindrique présentant des perforations de diamètre différent selon un gradient linéaire allant de 0,2 à 0,4 mm et en une vis sans fin convoyeuse à pas variable disposée à l'intérieur dudit tamis, pourvu en amont d'une trémie.

13. Installation selon la revendication 11 **caractérisée en ce que** le dispositif de lavage (102) est constitué des éléments suivants montés en série les uns à la suite des autres :
- une cuve (110) à double enceinte réfrigérée, munie d'une canule pour addition éventuelle d'eau (C), et d'un équipement de brassage;
- une essoreuse à grille (111);
- un dispositif de lavage en continu (112) constitué d'une cuve cylindrique à double enceinte réfrigérée munie d'une canule pour addition d'eau et d'un équipement de brassage.

14. Installation selon la revendication 11 **caractérisée en ce que** le dispositif de mélange de la pulpe (104) est un mélangeur en continu statique de type LPD (Low Pressure Drop).

15. Installation selon la revendication 11 **caractérisée en ce qu'**elle comporte en outre un dispositif de désodorisation (105) placé après le dispositif de mélange (104).

16. Installation selon la revendication 11 **caractérisée en ce que** le dispositif d'assèchement de la pulpe est un dispositif de décantation centrifuge (106).

17. Installation selon la revendication 11 **caractérisé en ce qu'**elle comporte en outre un dispositif d'extrusion à froid (107) permettant l'ajout (123) de cryoprotecteurs (Q)

18. Installation selon la revendication 11 **caractérisé en ce que** le dispositif d'extrusion à froid (107) est constitué des éléments suivants montés en série les uns à la suite des autres:
- un convoyeur de type transporteur à vis capote (113);
- un poussoir à débit contrôlé (114);
- une extrudeuse double vis (115) munie de moyens (126) de contrôle et de réglage de la pression.

19. Surimi-base et autres Produits Alimentaires Intermédiaires obtenus par le procédé selon la revendication 1 à partir de poissons gras, **caractérisé en ce que** la teneur en matières grasses résiduelles est comprise entre 0,1 et 1,5 %.

20. Surimi-base et autres Produits Alimentaires Intermédiaires selon la revendication 19 **caractérisé en ce que** les poissons gras sont de la sardine, du chinchard, de maquereau ou de la sardinelle.

## Claims

1. A process for the manufacture of intermediate food products in the form of hydrated concentrates of myofibrillar proteins from fish flesh, said process comprising the following steps in succession in the order shown:
- first of all, an initial pulp (B) of minced fish flesh is prepared (1) from fish fillets (A);
- said initial pulp is then washed (2) with water (C) to obtain a washed pulp (H) containing a residual fraction of lipids and sarcoplasmic proteins comprised between 0.1 and 3% of the weight of the pulp;
- said washed pulp (H) is then refined in the wet state (3) by removing a fraction of impurities (K);
- the refined pulp (J) is then mixed (4) until it is in the form of a homogeneous emulsion (L);
- the emulsified pulp (L) is then drained (6) to produce a densified pulp (O);
- cryoprotectants (Q) are then added (7) to the densified pulp (O) to form a final pulp (R) suitable for freezing;
- the final pulp (R) is then packaged (8) in the form of blocks (S);
- and said blocks (S) are frozen (9).

2. The process as claimed in claim 1, **characterized in that** the pulping operation (1) is coupled with the addition of water

3. The process as claimed in claim 2, **characterized in that** the water is added in a ratio of at least one volume of water to three volumes of pulp

4. The process as claimed in claim 1 or 2, **characterized in that** the pulping operation (1) is carried out as a function of a density gradient of the material.

5. The process as claimed in claim 1, **characterized in that** the washing operation (2) is composed of the following steps:
- water (C) is added to the initial pulp (B) and the whole is mixed (10) to form a water-pulp mixture (E);
- the water-pulp mixture (E) is centrifuged (11) and the resulting water (G) is removed;
- and the centrifuged pulp (F) is washed continuously (12) with water (C).

6. The process as claimed in claim 5, **characterized in that**, in the centrifugation step (11), the volume of water removed (E) is between 80 and 95% of the volume of water initially used.

7. The process as claimed in claim 1, **characterized in that** the mixing operation (4) is carried out until the homogenized pulp (L) is in the form of an emulsion with a stability of more than 10 minutes.

8. The process as claimed in claim 1, **characterized in that** the mixing step (4) is followed by a deodorization (5) of the emulsified pulp (L) in which the latter is evacuated.

9. The process as claimed in claim 1, **characterized in that** the operation (6) for draining the emulsified pulp (L) is carried out by centrifugal decantation.

10. The process as claimed in claim 1, **characterized in that** the final pulp (R) is subjected to a cold extrusion operation (7) during addition of cryoprotectants (Q).

11. An installation for carrying out the process as claimed in claim 1, **characterized in that** it comprises the following elements successively assembled in series in the order shown:
- a pulping device (101) also provided with a waste recovery trough (139);
- a pulp washing device (102) provided with a system for discharging the wash waters;
- a pulp refining device (103) provided with a system (142) for discharging the fraction removed (K);
- a continuous pulp mixing device (104);
- a pulp draining device (106) provided with a system (143) for discharging the liquid fraction (P);
- a device (123) for adding cryoprotectants (Q) to the pulp;
- a device (108) for forming the pulp into blocks (S);
- and a device (109) for freezing the blocks (S).

12. The installation as claimed in claim 11, **characterized in that** the pulp pulping device (101) consists of a cylindrical sieve having perforations of different diameter according to a linear gradient ranging from 0.2 to 0.4 mm, and of a variable-pitch endless screw conveyor placed inside said sieve, which is provided upstream with a hopper.

13. The installation as claimed in claim 11, **characterized in that** the washing device (102) consists of the following elements successively assembled in series:
- a refrigerated double-chamber tank (110) equipped with a pipe for the optional addition of water (C) and with mixing equipment;
- a screen centrifuge (111);
- and a continuous washing device (112) consisting of a refrigerated double-chamber cylindrical tank equipped with a pipe for the addition of water, and with mixing equipment.

14. The installation as claimed in claim 11, **characterized in that** the pulp mixing device (104) is a static continuous mixer of the LPD (low pressure drop) type.

15. The installation as claimed in claim 11, **characterized in that** it also comprises a deodorization device (105) located behind the mixing device (104).

16. The installation as claimed in claim 11, **characterized in that** the pulp draining device is a centrifugal decantation device (106).

17. The installation as claimed in claim 11, **characterized in that** it also comprises a cold extrusion device (107) allowing the addition (123) of cryoprotectants (Q).

18. The installation as claimed in claim 11, **characterized in that** the cold extrusion device (107) consists of the following elements successively assembled in series:
- a conveyor of the hooded screw conveyor type (113);
- a controlled-throughput ram (114);
- and a double-screw extruder (115) equipped with means (126) for monitoring and regulating the pressure.

19. Surimi-base and other intermediate food products obtained from oily fish by the process as claimed in claim 1, **characterized in that** the residual fat content is between 0.1 and 1.5%.

20. Surimi-base and other intermediate food products as claimed in claim 19, **characterized in that** the oily fish are sardine, scad, mackerel or sardinella.

## Patentansprüche

1. Herstellungsverfahren für Nahrungsmittel-Zwischenerzeugnisse in Form von hydrierten Konzentraten aus Myofibrillenproteinen von Fischfleisch, das die Folge der folgenden, in dieser Reihenfolge durchgeführten Schritte umfasst:
- zuerst wird, aus den Fischfilets (A), eine Anfangspulpe (B) aus gehacktem Fischfleisch hergestellt (1);
- dann wird die Anfangspulpe so lange mit Wasser (C) gewaschen (2), bis man eine gewaschene Pulpe (H) erhält, die eine Restfraktion von Lipiden und Sarkoplasmaproteinen enthält, die zwischen 0,1 und 3 Gewichts-% Pulpe umfasst;
- dann wird die gewaschene Pulpe (H) durch die Entfernung einer Verunreinigungsfraktion (K) im feuchten Zustand raffiniert (3);
- dann wird die raffinierte Pulpe (J) bis zum Erhalt einer homogen emulgierten Pulpe (L) gemischt (4);
- dann wird die emulgierte Pulpe (L) so entwässert (6), dass eine eingedickte Pulpe (O) entsteht;
- dann werden die Kryoprotektoren (Q) zur eingedickten Pulpe (O) zugegeben (7), um eine Endpulpe (R) zu bilden, die sich gefrieren lässt;
- dann wird die Endpulpe (R) zu Platten (S) aufbereitet (8);
- und werden die Platten (S) gefroren (9).

2. Verfahren nach Anspruch 1 **dadurch gekennzeichnet, dass** der Vorgang zur Herstellung der Pulpe (1) mit einer Wasserzugabe gekoppelt ist.

3. Verfahren nach Anspruch 2, **dadurch gekennzeichnet, dass** das Wasser in einem Verhältnis von wenigstens einem Volumenteil Wasser auf drei Volumenteile Pulpe zugegeben wird.

4. Verfahren nach Anspruch 1 oder 2, **dadurch gekennzeichnet, dass** der Vorgang zur Herstellung der Pulpe (1) entsprechend einem Stoffdichtegradienten erfolgt.

5. Verfahren nach Anspruch 1, **dadurch gekennzeichnet, dass** sich der Waschvorgang (2) aus den folgenden Schritten zusammensetzt:
- die Anfangspulpe (B), der zuvor Wasser (C) zugegeben wurde, wird gerührt (10), damit sich eine Mischung aus Wasser und Pulpe (E) bildet;
- die Mischung aus Wasser und Pulpe (E) wird geschleudert (11), wobei das beim Schleudern (G) frei werdende Wasser entfernt wird;
- die geschleuderte Pulpe (F) wird mit dem Wasser (C) kontinuierlich gewaschen (12).

6. Verfahren nach Anspruch 5, **dadurch gekennzeichnet, dass**, beim Schritt des Schleuderns (11), die entfernte Wassermenge (E) zwischen 80 und 95 % der ursprünglich zugegebenen Wassermenge ausmacht.

7. Verfahren nach Anspruch 1, **dadurch gekennzeichnet, dass** ein Mischvorgang (4) so lange ausgeführt wird, bis die homogenisierte Pulpe (L) die Form einer Emulsion aufweist, deren Beständigkeit größer als 10 Minuten ist.

8. Verfahren nach Anspruch 1, **dadurch gekennzeichnet, dass**, nach dem Schritt des Mischens (4), eine Desodorierung (5) der emulgierten Pulpe (L) dadurch durchgeführt wird, dass dieselbe einem Vakuum ausgesetzt wird.

9. Verfahren nach Anspruch 1, **dadurch gekennzeichnet, dass** der Entwässerungsvorgang (6) für die emulgierte Pulpe (L) durch eine Schleuderdekantation erfolgt.

10. Verfahren nach Anspruch 1, **dadurch gekennzeichnet, dass**, zum Zeitpunkt der Zugabe der Kryoprotektoren (Q), ein Vorgang zum Kaltfließpressen (7) der Endpulpe (R) erfolgt.

11. Anlage für die Anwendung des Verfahrens nach Anspruch 1, **dadurch gekennzeichnet, dass** sie die folgenden Elemente umfasst, die aufeinander folgend hintereinander und in dieser Reihenfolge angeordnet sind:
- eine Vorrichtung zur Herstellung der Pulpe (101), die außerdem mit einem Abfallauffangbehälter (139) ausgestattet ist;
- eine Vorrichtung (102) zum Waschen der Pulpe, die mit einem Waschwasserentsorgungssystem ausgestattet ist;
- eine Vorrichtung (103) zur Raffination der Pulpe, die mit einem Entsorgungssystem (142) für die entfernte Fraktion (K) ausgestattet ist;
- eine Vorrichtung (104) zum kontinuierlichen Mischen der Pulpe;
- eine Vorrichtung (106) zur Entwässerung der Pulpe, die mit einem Entsorgungssystem (143) für die Flüssigfraktion (P) ausgestattet ist;
- eine Vorrichtung (123) für die Zugabe der Kryoprotektoren (Q) zur Pulpe;
- eine Vorrichtung (108) zur Umformung der Pulpe in Platten (S);
- eine Vorrichtung zum Gefrieren (109) der Platten (S).

12. Anlage nach Anspruch 11, **dadurch gekennzeichnet, dass** die Vorrichtung (101) zur Herstellung der Pulpe aus einem zylindrischen Sieb, das Perforationen verschiedenen Durchmessers, mit einer Größe von 0,2 bis 0,4 mm, gemäß eines linearen Gradienten aufweist, und aus einer im Inneren des Siebs angeordneten Förderschnecke mit variabler Steigung besteht, die auf der Einlaufseite mit einem Trichter ausgestattet ist.

13. Anlage nach Anspruch 11, **dadurch gekennzeichnet, dass** die Vorrichtung zum Waschen (102) aus den folgenden Elementen besteht, die aufeinander folgend hintereinander angeordnet sind:
- einem gekühlten Behälter (110) mit doppelter Hülle, der mit einer Röhre für die eventuelle Zugabe von Wasser (C) ausgestattet ist, und einer Rühreinrichtung;
- einem Schleudertrockner mit Gitterrost (111);
- einer Vorrichtung zum kontinuierlichen Waschen (112), die aus einem zylindrischen, gekühlten Behälter mit doppelter Hülle besteht, der mit einer Röhre für die Wasserzugabe und einer Rühreinrichtung ausgestattet ist.

14. Anlage nach Anspruch 11, **dadurch gekennzeichnet, dass** die Mischvorrichtung für die Pulpe (104) ein statischer Durchlaufmischer vom Typ LPD (Low Pressure Drop) ist.

15. Anlage nach Anspruch 11, **dadurch gekennzeichnet, dass** sie außerdem eine Vorrichtung zur Desodorierung (105) umfasst, die hinter der Mischvorrichtung (104) angeordnet ist.

16. Anlage nach Anspruch 11, **dadurch gekennzeichnet, dass** die Vorrichtung zum Entwässern der Pulpe eine Schleuderdekantationsvorrichtung (106) ist.

17. Anlage nach Anspruch 11, **dadurch gekennzeichnet, dass** sie außerdem eine Vorrichtung zum Kaltfließpressen (107) umfasst, die die Zugabe (123) von Kryoprotektoren (Q) gestattet.

18. Anlage nach Anspruch 11, **dadurch gekennzeichnet, dass** die Vorrichtung zum Kaltfließpressen (107) aus den folgenden Elementen besteht, die aufeinander folgend hintereinander angeordnet sind:
- einem Förderer vom Typ eines Haubenschneckenförderers (113);
- einer Drückvorrichtung mit kontrolliertem Durchfluss (114);
- einem Doppelschneckenextruder (115), der mit Mitteln (126) zum Kontrollieren und Regeln des Druckes versehen ist.

19. Surimibasisprodukte und sonstige Nahrungsmittel-Zwischenerzeugnisse, die durch das Verfahren nach Anspruch 1 aus fetten Fischen gewonnen werden, **dadurch gekennzeichnet, dass** der Restfettgehalt zwischen 0,1 und 1,5 % liegt.

20. Surimibasisprodukte und sonstige Nahrungsmittel-Zwischenerzeugnisse nach Anspruch 19, **dadurch gekennzeichnet, dass** die fetten Fische die Sardine, die Bastardmakrele, die Makrele oder die Sardinelle sind.
